# NEUE EUROPÄISCHE PATENTSCHRIFT

(11) **EP 3 485 166 B2**
(45) Veröffentlichungstag und Bekanntmachung des Hinweises auf die Entscheidung über den Einspruch: **19.02.2025**
(45) Hinweis auf die Patenterteilung: 15.04.2020
(21) Anmeldenummer: 17743290.3
(22) Anmeldetag: 14.07.2017
(51) Int. Cl.: F04B 13/00, F04B 49/06, F04B 43/04, F04B 43/067

(54) **DOSIEREINRICHTUNG MIT KOMMUNIKATIONSSCHNITTSTELLE**
DOSING APPARATUS WITH A COMMUNICATION INTERFACE
APPAREIL DE DOSAGE AVEC UNE INTERFACE DE COMMUNICATION

(30) Priorität: 18.07.2016 DE 102016113214
(43) Veröffentlichungstag der Anmeldung: 22.05.2019
(73) Patentinhaber: ProMinent GmbH, 69123 Heidelberg (DE)
(72) Erfinder: KAIBEL, Jens, 68623 Lampertheim-Hofheim (DE); DAMNIK, Markus, 68782 Brühl (DE)
(74) Vertreter: WSL Patentanwälte Partnerschaft mbB
(86) Internationale Anmeldenummer: PCT/EP2017/067812
(87) Internationale Veröffentlichungsnummer: WO 2018/015285

(56) Entgegenhaltungen:
- EP-A1- 0 183 351
- EP-A1- 2 966 299
- EP-A2- 1 754 891
- GB-A- 2 312 419
- US-A1- 2002 155 832
- US-A1- 2012 282 111

## Beschreibung

Die vorliegende Erfindung betrifft eine Dosiereinrichtung mit einer Dosierkammer, in der ein Verdrängungselement derart beweglich angeordnet ist, dass es zwischen zwei Positionen hin- und herbewegbar ist, wobei das Volumen der Dosierkammer in der einen Position größer als in der anderen Position ist.

Die Dosiereinrichtung weist weiterhin einen Aktor zum Antreiben des Verdrängungselementes auf, welcher einen Aktoreingang für ein elektrisches Ansteuersignal aufweist und derart aufgebaut ist, dass ein am Aktoreingang anliegendes elektrisches Ansteuersignal in eine mechanische Bewegung umgesetzt wird. Des Weiteren weist die Dosiereinrichtung einen Sensor zur Erfassung einer physikalischen oder chemischen Messgröße auf, der einen Sensorausgang für ein elektrisches Messsignal aufweist und derart ausgebildet ist, dass er die physikalische oder chemische Messgröße erfasst, in ein elektrisches Messsignal umsetzt und dieses am Sensorausgang zur Verfügung stellt. Schließlich weist die Dosiereinrichtung eine Kommunikationsschnittstelle auf, über die die Dosiereinrichtung mit einem entfernt angeordneten Server kommunizieren kann.

Eine solche Dosiereinrichtung kann bspw. eine Membrandosierpumpe sein. Als Verdrängungselement dient hier eine bewegliche Membran.

Die Dosierkammer ist im Betrieb über ein Saugrückschlagventil mit einer Saugleitung und über ein Druckrückschlagventil mit einer Druckleitung verbunden. Sowohl Saugrückschlagventil als auch Druckrückschlagventil können Teil der Dosiereinrichtung sein. Sie können jedoch auch anlagenseitig bereitgestellt werden.

Wird daher die Membran in die Position bewegt, in der das Volumen der Dosierkammer am größten ist, wird zu förderndes Medium über das Saugventil aus der Saugleitung in die Dosierkammer gesaugt. Im Anschluss daran wird die Membran in Richtung derjenigen Position bewegt, in der das Volumen der Dosierkammer am geringsten ist, wodurch bewirkt wird, dass das Saugrückschlagventil geschlossen wird, worauf der Druck in der Dosierkammer ansteigt bis das Druckrückschlagventil öffnet und das sich in der Dosierkammer befindliche zu fördernde Medium in die Druckleitung gedrückt wird. Damit die Membran, d.h. das Verdrängungselement zwischen den beiden Positionen hin- und herbewegt werden kann, ist ein entsprechender Antriebsaktor vorgesehen. Beispielsweise kann die Membran hydraulisch angetrieben werden, sodass der Aktor ein entsprechender Kolben ist, dessen eine Fläche mit dem Hydraulikfluid in Kontakt steht.

Alternativ könnte die Membran auch magnetisch angetrieben werden. Beispielsweise könnte die Membran mit einer Schubstange fest verbunden sein, die in einem im Pumpengehäuse fest verankerten Magnetmantel in der Längsachse axial beweglich gelagert ist, sodass die Schubstange und damit die Membran bei der elektrischen Ansteuerung der Magnetspule in den Magnetmantel gegen die Wirkung einer Druckfeder in die Bohrung des Magnetmantels hinein gezogen wird und die Schubstange nach Deaktivierung des Magneten durch die Druckfeder in die Ausgangslage zurückkehrt, sodass die Membran bei fortgesetzter Aktivierung und Deaktivierung der Magnetspule eine oszillierende Bewegung durchführt. In diesem Fall ist die Magnetspule als Aktor anzusehen.

Diese Dosiereinrichtungen weisen häufig einen Sensor zur Erfassung einer physikalischen oder chemischen Messgröße auf. Beispielsweise könnte der pH-Wert des zu fördernden Mediums in der Druckleitung erfasst werden. Alternativ kann aber auch der Strom und/oder die Spannung durch die den Aktor bildende Magnetspule erfasst werden. Der Sensor erfasst die entsprechende Messgröße im Betrieb und wandelt die erfasste Messgröße in ein elektrisches Messsignal um, dass er am Sensorausgang zur Verfügung stellt. Der Sensor kann somit beispielsweise eine Betriebsgröße der Dosiereinrichtung (z.B. Strom oder Spannung des Antriebs, Position des Verdrängungselementes, Druck in der Dosierkammer) oder eine externe Größe (z.B. pH-Wert in der Druck- oder Saugleitung, Umgebungstemperatur, Luftdruck usw.) messen.

Die EP 1 757 809 A1 beschreibt eine bewegungsgeregelte Magnetdosierpumpe. Diese weist als Sensor einen Positionssensor auf, der die Position der Membran bzw. der mit der Membran verbundenen Schubstange erfasst. Die dort beschriebene Magnetdosierpumpe vergleicht die erfasste Position mit einem vorgegebenen Sollwertprofil und regelt die Bewegung des Verdrängungselementes derart, dass die Abweichung zwischen Istposition und Sollposition möglichst gering wird.

Die bekannte Dosiereinrichtung weist somit eine entsprechende Steuereinrichtung auf, mit deren Hilfe eine geregelte Dosierung erfolgen kann. Das entsprechende Regelungsverfahren ist dabei in einer Software abgelegt, die innerhalb der Dosiereinrichtung gespeichert ist. Bei der Verwendung der Pumpe müssen entsprechende Eingaben am Gerät selbst vorgenommen werden, um der Dosiereinrichtung mitzuteilen, in welcher Form eine entsprechende Regelung erfolgen soll.

In mehr oder minder regelmäßigen Abständen entwickelt der Pumpenhersteller verbesserte Regelverfahren, die jedoch nicht unmittelbar von der Dosiereinrichtung verwendet werden können. Es ist daher vielmehr notwendig, dass ein entsprechender Servicetechniker vor Ort die Software auf der Dosiereinrichtung mittels eines Firmwareupdates aktualisiert. Mit fortschreitender Entwicklung werden den Dosiereinrichtungen immer höhere Rechen- und Speicherleistungen zur Verfügung gestellt mit der Folge, dass ältere Modelle der Dosiereinrichtungen nicht mehr mit aktuellen Firmwareupdates versehen werden können, da sie die entsprechenden Rechen- und/oder Speichervoraussetzungen nicht mehr erfüllen. In diesem Fall muss dann entweder auf die verbesserten Regelverfahren verzichtet werden oder die gesamte Dosiereinrichtung ausgetauscht werden.

Die EP 1 754 891 A2 und die US 2012/0282111 A1 zeigen regelbare Pumpen. Die US 2002/0155832 zeigt ein drahtloses Telemetriesystem. Die GB 2312419 beschreibt eine Dosiersteuervorrichtung.

Ausgehend von dem beschriebenen Stand der Technik ist es daher Aufgabe der vorliegenden Erfindung eine Dosiereinrichtung bereitzustellen, die vom Benutzer einfacher angesteuert werden kann und die unabhängig von Hardwarevoraussetzungen einfach an verbesserte Regelungsverfahren angepasst werden kann.

Erfindungsgemäß wird dies dadurch gelöst, dass Aktor, Sensor und Kommunikationsschnittstelle derart ausgebildet sind, dass ein am Sensorausgang anliegendes elektrisches Messsignal über die Kommunikationsschnittstelle an den entfernten Server übertragen werden kann und eine elektrisches Ansteuersignal über die Kommunikationsschnittstelle empfangen und an den Aktoreingang übertragen werden kann.

Mit anderen Wort wird die eigentliche Regelaufgabe von der Dosiereinrichtung an den entfernten Server übertragen. Die Dosiereinrichtung selbst muss daher lediglich in der Lage sein, das am Sensorausgang anliegende elektrische Messsignal an den entfernten Server zu übertragen und ein entsprechendes elektrisches Ansteuersignal für den Aktoreingang vom entfernten Server zu empfangen.

Die Kommunikationsschnittstelle ist vorzugsweise eine Netzwerkschnittstelle, d. h. eine Schnittstelle, die Sensor und Aktor Zugang zu einem Rechnernetz ermöglichen. In diesem Fall muss auch der entfernte Server eine entsprechende als Netzwerkschnittstelle ausgebildete Kommmunikationsschnittstelle aufweisen, um dem Server ebenfalls Zugang zu dem Rechnernetz zu ermöglichen.

So könnte bspw. ein Dosiersystem mindestens eine der erfindungsgemäßen Dosiereinrichtungen und einen entfernt zur Dosiereinrichtung angeordneten Server mit einer Dosiereinrichtungssoftware umfassen, wobei die Dosiereinrichtungssoftware eine Regeleinrichtung verwirklicht, in weleher das über die Kommunikationsschnittstelle übertragene elektrische Messsignal mit einer Sollwertkurve verglichen, daraus eine Stellgröße errechnet und die Stellgröße als elektrisches Ansteuersignal über die Kommunikationsschnittstelle an den Aktoreingang übertragen wird.

Der entfernt angeordnete Server muss nicht im selben Raum wie die Dosiereinrichtung angeordnet sein, sondern kann bspw. im Nachbarraum oder in irgendeinem beliebigen Raum, der eine entsprechende Prozessleitstelle aufweist, angeordnet sein. Besonders bevorzugt ist die Kommunikationsschnittstelle derart ausgebildet, dass sie über das Internet kommunizieren kann, sodass der entfernte Server an einem beliebigen Ort, z.B. bei dem Dosiereinrichtungshersteller angeordnet sein kann. Insbesondere im letzteren Fall kann das Dosiersystem eine Vielzahl von Dosiereinrichtungen aufweisen, die alle mit dem entfernt angeordneten Server kommunizieren. In einer besonders bevorzugten Ausführungsform weist der Sensor einen Sensorbetriebseingang für ein elektrisches Betriebssignal auf, wobei eine Betriebssignalerzeugungseinrichtung vorgesehen ist, welche ein elektrisches Betriebssignal erzeugen kann und mit dem Sensorbetriebseingang verbunden ist, wobei die Betriebssignalerzeugungseinrichtung derart ausgebildet ist, dass sie über die Kommunikationsschnittstelle mit einem entfernt angeordneten Server kommunizieren kann.

Ist der Sensor ein amperometrischer Sensor, wie z.B. ein Chlorsensor, so kann beispielsweise ein Aktivierungsbetrieb gestartet werden. Die Art der Aktivierung kann von verschiedenen Faktoren, wie z.B. dem speziellen Anwendungsfall, der Art des zu fördernden Mediums, dem zeitlichen Konzentrationsverlauf oder dem Alter des Sensors abhängen. Dadurch, dass die Betriebssignalerzeugungseinrichtung mit einem entfernt angeordneten Server kommunizieren kann, kann die entsprechende Betriebsspannung von dem entfernt angeordneten Server bestimmt werden.

Stellt sich bspw. nach Auslieferung der Dosiereinrichtung mit einem entsprechenden Sensor heraus, dass nach einer gewissen Betriebszeit des Sensors die Stärke des Messsignals nachlässt, so kann durch Kommunikation mit dem entfernt angeordneten Sensor der Aktivierungsbetrieb zur Erhöhung des Messsignals ausgelöst werden.

Der Sensor kann in einer bevorzugten Ausführungsform in der Dosierkammer angeordnet sein. Alternativ kann der Sensor eine Betriebsgröße des Antriebes des Verdrängungselementes erfassen. Betriebsgrößen des Aktors können beispielsweise die Position des Verdrängungselementes oder die Spannung oder der Strom am Aktor sein.

In einer weiteren besonders bevorzugten Ausführungsform weist die Dosiereinrichtung einen weiteren Sensor zur Erfassung einer weiteren physikalischen oder chemischen Messgröße auf, der ebenfalls einen Sensorausgang für ein elektrisches Messsignal aufweist und derart ausgebildet ist, dass er die weitere physikalische oder chemische Messgröße erfasst, in ein elektrisches Messsignal umsetzt und dieses am Sensorausgang zur Verfügung stellt, wobei der weitere Sensor und die Kommunikationsschnittstelle derart ausgebildet sind, dass ein am Sensorausgang des weiteren Sensor anliegendes elektrisches Messsignal über die Kommunikationsschnittstelle an den entfernt angeordneten Server übertragbar ist.

Der auf dem entfernt angeordneten Server bereitgestellten Dosiereinrichtungssoftware liegt somit die Information über den Wert einer weiteren physikalischen oder chemischen Messgröße vor. Diese Information kann bspw. in die Regeleinrichtung integriert werden. Sie kann stattdessen oder zusätzlich auch für eine Notabschaltung oder eine Alarmierung verwendet werden. In einer weiteren bevorzugten Ausführungsform ist eine Notfalleinrichtung vorgesehen, welche detektiert, ob die Dosiereinrichtung über die Kommunikationsschnittstelle mit einem entfernten Server kommuniziert und, falls keine Kommunikation oder länger als ein vorbestimmtes Zeitintervall keine Kommunikation detektiert wird, eine Notabschaltung initiiert.

Da die erfindungsgemäße Dosiereinrichtung eine kontinuierliche Verbindung mit dem entfernten Server voraussetzt, kann die Notfalleinrichtung die entsprechende Dosierfunktion unterbrechen, wenn aus irgendeinem Grund die Verbindung zu dem entfernt angeordneten Server ausfällt.

Alternativ dazu könnte die Notfalleinrichtung auch eine entsprechende Notfallregelung aufweisen. Diese Notfallregelung muss ohne eine Verbindung zum entfernt angeordneten Server erfolgen. Beispielsweise könnte die Notfallregelung ein zuletzt von dem entfernt angeordneten Server empfangenes Muster des elektrische Ansteuersignals an den Aktoreingang übertragen. Ist beispielsweise der Aktor die Magnetspule des Magnetantriebs einer Dosierpumpe, so wird im Normalbetrieb vom entfernt angeordneten Server ein zeitlich variierendes Ansteuersignal (Signalmuster) empfangen und an den Aktoreingang übertragen. Im Falle einer Notfallregelung könnte das zuletzt empfangene zeitlich variierende Ansteuersignal weiter verwendet werden. Eine aktuelle Anpassung des Signalmusters könnte dann während der Notfallregelung zwar nicht erfolgen, in der Regel sind die Verbindungsunterbrechungen jedoch nur kurzzeitig, so dass sobald die Verbindung wieder besteht, der entfernt angeordnete Server seine Aufgabe wieder übernehmen kann. Alternativ könnte in der Dosierpumpe auch eine Referenzhubfrequenz abgelegt sein und im Falle der Notfallregelung die Dosierpumpe mit der Referenzhubfrequenz betrieben werden. Falls gewünscht, kann für den Fall, dass die Verbindung zum entfernt angeordneten Server länger als eine vorbestimmte Zeitdauer unterbrochen ist, die Notfallregelung abgebrochen und eine Notabschaltung vorgenommen werden.

In einer weiteren bevorzugten Ausführungsform weist der Server eine Remote-Access-Schnittstelle auf, über die von einem externen Gerät mit der Dosiereinrichtungssoftware kommuniziert werden kann, wobei vorzugsweise die Remote-Access-Schnittstelle eine Webschnittstelle ist. Insbesondere dann, wenn der entfernt angeordnete Server in einem nicht zugänglichen Serverraum oder sogar beim Hersteller der Dosiereinrichtung angeordnet ist, kann vom die Dosiereinrichtung verwendenden Kunden über die Remote-Access-Schnittstelle auf die Software zugegriffen werden und entsprechende Informationen abgerufen werden. So kann bspw. auf einem PC, einem Smartphone oder einem Tablet-Computer Informationen über die gemessenen physikalischen oder chemischen Messgrößen visualisiert werden. Zudem kann über die Remote-Access-Schnittstelle die gewünschte Dosiergeschwindigkeit eingestellt werden.

In einer weiteren bevorzugten Ausführungsform weist die Dosiereinrichtungssoftware eine Alarmierungseinrichtung auf, die in der Lage ist, eine Alarmmeldung an ein externes Gerät zu senden. Stellt bspw. die Dosiereinrichtungssoftware auf dem entfernt angeordneten Server fest, dass die erfasste physikalische oder chemische Messgröße zu stark von den erwartenden Messgrößenwert abweicht, so kann sie den Benutzer der Dosiereinrichtung entsprechend alarmieren, bspw. durch versenden einer SMS oder einer E-Mail oder durch Posten einer entsprechenden Twittermeldung.

In einer weiteren bevorzugten Ausführungsform weist der Server einen Datenlogger auf, der mit der Dosiereinrichtungssoftware kommunizieren kann. In dem Datenlogger werden alle verfügbaren Daten, die die Dosiereinrichtung betreffen, abgelegt. So kann dem Datenlogger entnommen werden, welche Laufzeit die Dosiereinrichtung hat und welche Einsatzbedingungen, wie z.B. Dosiergeschwindigkeit und Förderdruck bei der verwendeten Dosierapplikation vorlagen.

In einer weiteren bevorzugten Ausführungsform weist der Server eine Wartungsschnittstelle auf, über die von einem Wartungsserver auf den Server zugegriffen werden kann. Über den Wartungsserver kann bspw. der Inhalt des Datenloggers abgerufen werden. Zudem ist es möglich, die Dosiereinrichtungssoftware auszutauschen oder bestimmte Funktionalitäten der Software freizuschalten.

So ist es bspw. denkbar, dass eine Dosieranlage mit einer Mehrzahl von Dosiereinrichtungen ausgestattet ist, die allesamt mit einem auf dem Gelände der Dosieranlage angeordneten Server, auf dem die Dosiereinrichtungssoftware abgelegt ist, verbunden sind. Ein entsprechender Wartungsserver kann dann bei dem Dosiereinrichtungshersteller angeordnet sein. Mit Hilfe des Wartungsservers kann dann auf einer Vielzahl von Servern zugegriffen werden, wobei bspw. die Dosiereinrichtungssoftware ausgetauscht werden kann und/oder der Inhalt des Datenloggers ausgelesen werden kann, wobei die Server ihrerseits wieder eine Mehrzahl von Dosiereinrichtungen regeln.

Weitere Vorteile, Merkmale und Anwendungsmöglichkeiten der vorliegenden Erfindung werden deutlich anhand der folgenden Beschreibung einer bevorzugten Ausführungsform. Es zeigen:
- Figur 1: den schematischen Aufbau von Dosiereinrichtungen des Standes der Technik und
- Figur 2: den schematischen Aufbau eines Dosiersystems mit einer Dosiereinrichtung gemäß einer Ausführungsform der vorliegenden Erfindung.

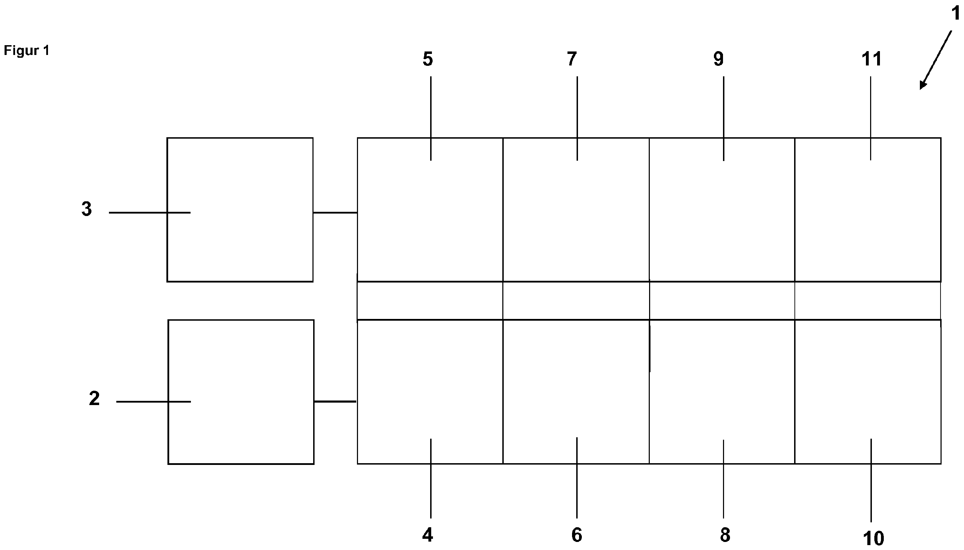

In Figur 1 ist eine schematische Darstellung einer Dosiereinrichtung 1 des Standes der Technik gezeigt. Die Dosiereinrichtung 1 umfasst zumindest einen entsprechenden Aktor 2, mit dessen Hilfe das Verdrängungselement angetrieben werden kann. Zudem können ein oder mehrere Sensoren 3 vorgesehen sein. Beispielsweise kann ein Sensor zur Messung eine pH-Wertes vorhanden sein. Innerhalb der Dosiereinrichtung muss Hard- und Software vorgesehen sein, die die Aktoransteuerung 4, die Sensordatenerfassung 5, die eigentliche Regelungsaufgabe 6, die Rechenleistungsbereitstellung 7, die Ansteuerung von sonstigen Ein- und Ausgängen 8, die Ablaufsteuerung 9, ggf. weitere Funktionen, wie z.B. Datalogging und Datenvisualisierung 10, sowie eine entsprechende Benutzerführung 11 bereitstellt.

Es ist sofort ersichtlich, dass sich die Funktionalitäten 4 bis 11 unter Umständen ändern können. In diesem Fall muss die entsprechende Software ersetzt werden, was jedoch in Abhängigkeit von der bereitgestellten Hardware nicht immer möglich ist. Daher wird bei den bekannten Dosiereinrichtungen meist mehr Rechenleistung bereitgestellt als notwendig ist, um für zukünftige Firmwareupdates gewappnet zu sein. Dennoch ist der Aufwand, mit der Firmwareaktualisierung hoch und nicht immer ist sichergestellt, dass die bei der Herstellung der Dosiereinrichtung bereitgestellte Rechenleistung tatsächlich später auch ausreicht.

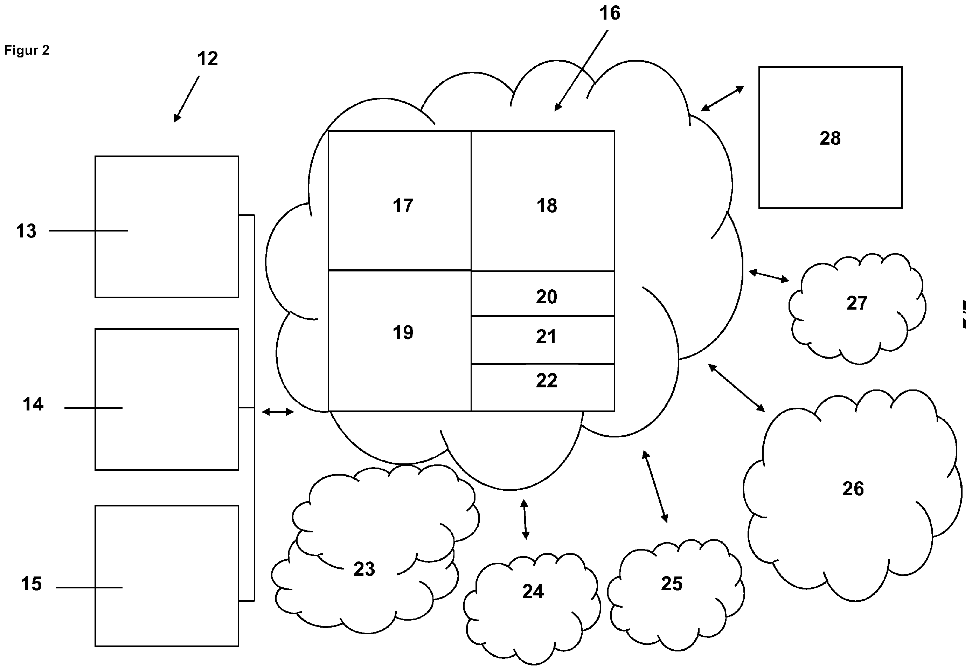

Erfindungsgemäß wird daher das in Figur 2 gezeigte System vorgeschlagen. Die erfindungsgemäße Dosiereinrichtung 12 besteht hier aus einem Sensor 13 und einem Aktor 14 sowie ggf. einer Notlaufregelung 15. Sowohl der Sensor 13 als auch der Aktor 14 sind vernetzbar, d.h. können über eine Kommunikationsschnittstelle mit einem Server 16, der entfernt angeordnet ist, kommunizieren. Der Server, der bspw. virtualisiert sein kann, ist zuständig für die Rechenleistungsbereitstellung 17, die Ablaufsteuerung 18, die Regelungsaufgabe 19, stellt einen Webserver 20 zur Verfügung, erlaubt Softwareupdates 21 und kann ggf. vom Kunden zusätzlich erworbene weitere Funktionalitäten 22 freigeben. Der entfernt angeordnete Server 16 kann zusätzliche Internetdienste 23 aufnehmen, kann eine Verbindung zu einem Web-SPS-Systems 24, einem Datalogger 25 aufweisen. Zudem kann ein Wartungsserver 26 vorgesehen sein. Des Weiteren kann eine Alarmierung 27 erfolgen sowie über eine Remote-Access-Schnittstelle 28 eine Visualisierung von Daten bspw. über PC, Smartphone oder einen Tablet-Computer erfolgen.

### Bezugszeichen

- 1: Dosiereinrichtung
- 2: Aktor
- 3: Sensor(en)
- 4: Aktoransteuerung
- 5: Sensordatenerfassung
- 6: Regelungsaufgabe
- 7: Rechenleistungsbereitstellung
- 8: Ansteuerung von sonstigen Ein- und Ausgängen
- 9: Ablaufsteuerung
- 10: Datalogging und Datenvisualisierung
- 11: Benutzerführung
- 12: Dosiereinrichtung
- 13: Sensor
- 14: Aktor
- 15: Notlaufregelung
- 16: Server
- 17: Rechenleistungsbereitstellung
- 18: Ablaufsteuerung
- 19: Regelungsaufgabe
- 20: Webserver
- 21: Softwareupdates
- 22: weitere Funktionalitäten
- 23: zusätzliche Internetdienste
- 24: Web-SPS-System
- 25: Datalogger
- 26: Wartungsserver
- 27: Alarmierung
- 28: Remote-Access-Schnittstelle

## Patentansprüche

1. Dosiereinrichtung (1, 12) mit einer Dosierkammer, in der ein Verdrängungselement derart beweglich angeordnet ist, dass es zwischen zwei Positionen hin- und her bewegbar ist, wobei das Volumen der Dosierkammer in der einen Position größer als in der anderen Position ist, wobei die Dosiereinrichtung (1, 12) weiterhin aufweist:
- einen Aktor (2, 14) zum Antreiben des Verdrängungselement, welcher einen Aktoreingang für ein elektrisches Ansteuersignal aufweist und derart aufgebaut ist, dass ein am Aktoreingang anliegendes elektrisches Ansteuersignal in eine mechanische Bewegung umgesetzt wird,
- einen Sensor (3, 13) zur Erfassung einer physikalischen oder chemischen Messgröße, der einen Sensorausgang für ein elektrisches Messsignal aufweist und derart ausgebildet ist, dass er die physikalische oder chemische Messgröße erfasst, in ein elektrisches Messsignal umsetzt und dieses am Sensorausgang zur Verfügung stellt,
- eine Kommunikationsschnittstelle, über die die Dosiereinrichtung (1, 12) mit einem entfernt angeordneten Server (16) kommunizieren kann,
**dadurch gekennzeichnet, dass**
Aktor (2, 14), Sensor (3, 13) und Kommunikationsschnittstelle derart ausgebildet sind, dass ein im Betrieb der Dosiereinrichtung (1, 12) am Sensorausgang anliegendes elektrisches Messsignal über die Kommunikationsschnittstelle an den entfernten Server (16) übertragbar ist und ein elektrisches Ansteuersignal über die Kommunikationsschnittstelle empfangbar und an den Aktoreingang übertragbar ist, wobei eine Notfalleinrichtung vorgesehen ist, welche detektiert, ob die Dosiereinrichtung (1, 12) über die Kommunikationsschnittstelle mit einem entfernten Server (16) kommuniziert und, falls keine oder länger als ein vorbestimmtes Zeitintervall keine Kommunikation detektiert wird, eine Notabschaltung oder eine Notlaufregelung initiiert.

2. Dosiereinrichtung (1, 12) nach Anspruch 1, **dadurch gekennzeichnet, dass** der Sensor (3, 13) einen Sensorbetriebseingang für ein elektrisches Betriebssignal aufweist, wobei eine Betriebssignalerzeugungseinrichtung vorgesehen ist, welche ein elektrisches Betriebssignal erzeugen kann und mit den Sensorbetriebseingang verbunden ist, wobei die Betriebssignalerzeugungseinrichtung derart ausgebildet ist, dass sie über die Kommunikationsschnittstelle mit einem entfernt angeordneten Server (16) kommunizieren kann.

3. Dosiereinrichtung (1, 12) nach einem der Ansprüche 1 bis 2, **dadurch gekennzeichnet, dass** ein weiterer Sensor (3, 13) zur Erfassung einer weiteren physikalischen oder chemischen Messgröße vorgesehen ist, der einen Sensorausgang für ein elektrisches Messsignal aufweist und derart ausgebildet ist, dass er die weitere physikalische oder chemische Messgröße erfasst, in ein elektrisches Messsignal umsetzt und dieses am Sensorausgang zur Verfügung stellt, wobei weiterer Sensor (3, 13) und Kommunikationsschnittstelle derart ausgebildet sind, dass ein am Sensorausgang des weiteren Sensor (3, 13) anliegendes elektrische Messsignal über die Kommunikationsschnittstelle an den entfernt angeordneten Server (16) übertragen werden kann.

4. Dosiersystem mit mindestens einer Dosiereinrichtung (1, 12) mit einer Dosierkammer, in der ein Verdrängungselement derart beweglich angeordnet ist, dass es zwischen zwei Positionen hin- und her bewegbar ist, wobei das Volumen der Dosierkammer in der einen Position größer als in der anderen Position ist, wobei die Dosiereinrichtung (1, 12) weiterhin aufweist:
- einen Aktor (2, 14) zum Antreiben des Verdrängungselement, welcher einen Aktoreingang für ein elektrisches Ansteuersignal aufweist und derart aufgebaut ist, dass ein am Aktoreingang anliegendes elektrisches Ansteuersignal in eine mechanische Bewegung umgesetzt wird,
- einen Sensor (3, 13) zur Erfassung einer physikalischen oder chemischen Messgröße, der einen Sensorausgang für ein elektrisches Messsignal aufweist und derart ausgebildet ist, dass er die physikalische oder chemische Messgröße erfasst, in ein elektrisches Messsignal umsetzt und dieses am Sensorausgang zur Verfügung stellt,
- eine Kommunikationsschnittstelle, über die die Dosiereinrichtung (1, 12) mit einem entfernt angeordneten Server (16) kommunizieren kann,
**dadurch gekennzeichnet, dass**
Aktor (2, 14), Sensor (3, 13) und Kommunikationsschnittstelle derart ausgebildet sind, dass ein im Betrieb der Dosiereinrichtung (1, 12) am Sensorausgang anliegendes elektrisches Messsignal über die Kommunikationsschnittstelle an den entfernten Server (16) übertragbar ist und ein elektrisches Ansteuersignal über die Kommunikationsschnittstelle empfangbar und an den Aktoreingang übertragbar ist wobei das Dosiersystem einen entfernt angeordneten Server (16) mit einer Dosiereinrichtungssoftware aufweist, welche eine Regeleinrichtung verwirklicht, in welcher das über die Kommtinikationsschnittstelle übertragene elektrische Messsignal mit einer Sollwert-Kurve verglichen, daraus eine Stellgröße errechnet und die Stellgröße als elektrisches Ansteuersignal über die Kommunikationsschnittstelle an den Aktoreingang übertragen wird..

5. Dosiersystem nach Anspruch 4, **dadurch gekennzeichnet, dass** der Server (16) eine Remote-Access-Schnittstelle aufweist, über die von einem externen Gerät mit der Dosiereinrichtungssoftware kommuniziert werden kann, wobei vorzugsweise die Remote-Access-Schnittstelle eine Webschnittstelle ist.

6. Dosiersystem nach einem der Ansprüche 4 bis 5, **dadurch gekennzeichnet, dass** die Dosiereinrichtungssoftware eine Alarmierungseinrichtung aufweist, die in der Lage ist, eine Alarmmeldung an ein externes Gerät zu senden.

7. Dosiersystem nach einem der Ansprüche 4 bis 6, **dadurch gekennzeichnet, dass** eine Mehrzahl von Dosiereinrichtungen (1, 12) nach einem der Ansprüche 1 bis 3, vorgese-hen sind.

8. Dosiersystem nach einem der Ansprüche 4 bis 7, **dadurch gekennzeichnet, dass** der Server (16) einen Datenlogger aufweist, der mit der Dosiereinrichtungssoftware kommunizieren kann.

9. Dosiersystem nach einem der Ansprüche 4 bis 8, **dadurch gekennzeichnet, dass** der Server (16) eine Wartungsschnittstelle aufweist, über die von einem Wartungsserver (26) auf den Server (16) zugegriffen werden kann.

10. Dosieranlagensystem mit einer Mehrzahl von Dosiersystemen nach einem der Ansprüche 4 bis 9 und einem Wartungsserver (26), über den die Dosiereinrichtungssoftware ausgetauscht werden kann und der Inhalt des Datenloggers ausgelesen werden kann.

## Claims

1. A metering device (1, 12) having a metering chamber in which a displacement element is arranged moveably in such a way that it is reciprocable between two positions, wherein the volume of the metering chamber in the one position is greater than in the other position, wherein the metering device (1, 12) further has:
- an actuator (2, 4) for driving the displacement element, which has an actuator input for an electrical actuation signal and is so constructed that an electrical actuation signal at the actuator input is converted into a mechanical movement,
- a sensor (3, 13) for detecting a physical or chemical measurement value, which has a sensor output for an electrical measurement signal and is so adapted that it detects the physical or chemical measurement value, converts it into an electrical measurement signal and makes same available at the sensor output,
- a communication interface, by way of which the metering device (1, 12) can communicate with a remotely arranged server (16),
**characterised in that**
the actuator (2, 14), the sensor (3, 13) and the communication interface are so adapted that an electrical measurement signal at the sensor output in operation of the metering device (1, 12) can be transmitted by way of the communication interface to the remote server (16) and an electrical actuation signal can be received by way of the communication interface and transmitted to the actuator input, wherein there is provided an emergency device for detecting whether the metering device (1, 12) is communicating by way of the communication interface with a remote server (16) and if no communication or no communication for longer than a predetermined time interval is detected it initiates an emergency shutdown or an emergency closed-loop control action.

2. A metering device (1, 12) according to claim 1 **characterised in that** the sensor (3, 13) has a sensor operational input for an electrical operating signal, wherein there is provided an operating signal generating device which can generate an electrical operating signal and which is connected to the sensor operational input, wherein the operating signal generating device is so adapted that it can communicate by way of the communication interface with a remotely arranged server (16).

3. A metering device (1, 12) according to claim 1 or claim 2 **characterised in that** there is provided a further sensor (3, 13) for detecting a further physical or chemical measurement value, which has a sensor output for an electrical measurement signal and is so adapted that it detects the further chemical or physical measurement value, converts it into an electrical measurement signal, and makes same available at the sensor output, wherein the further sensor (3, 13) and the communication interface are so adapted that an electrical measurement signal at the sensor output of the further sensor (3, 13) can be transmitted by way of the communication interface to the remotely arranged server (16).

4. A metering system comprising at least one metering device (1, 12) having a metering chamber in which a displacement element is arranged moveably in such a way that it is reciprocable between two positions, wherein the volume of the metering chamber in the one position is greater than in the other position, wherein the metering device (1, 12) further has:
- an actuator (2, 4) for driving the displacement element, which has an actuator input for an electrical actuation signal and is so constructed that an electrical actuation signal at the actuator input is converted into a mechanical movement,
- a sensor (3, 13) for detecting a physical or chemical measurement value, which has a sensor output for an electrical measurement signal and is so adapted that it detects the physical or chemical measurement value, converts it into an electrical measurement signal and makes same available at the sensor output,
- a communication interface, by way of which the metering device (1, 12) can communicate with a remotely arranged server (16),
**characterised in that**
the actuator (2, 14), the sensor (3, 13) and the communication interface are so adapted that an electrical measurement signal at the sensor output in operation of the metering device (1, 12) can be transmitted by way of the communication interface to the remote server (16) and an electrical actuation signal can be received by way of the communication interface and transmitted to the actuator input, wherein the metering system comprises a remotely arranged server (16) with a metering device software, which realizes a control device, in which the electrical measurement signal transmitted via the communication interface is compared with a setpoint curve, a manipulated variable is calculated from this and the manipulated variable is transmitted to the actuator input as an electrical control signal via the communication interface.

5. A metering system according to claim 4 **characterised in that** the server (16) has a remote access interface, by way of which it is possible to communicate from an external device with the metering device software, wherein preferably the remote access interface is a web interface.

6. A metering system according to one of claims 4 and 5 **characterised in that** the metering device software has an alarm device capable of sending an alarm message to an external device.

7. A metering system according to one of claims 4 to 6 **characterised in that** there are provided a multiplicity of metering devices (1, 12) according to one of claims 1 to 3.

8. A metering system according to one of claims 4 to 7 **characterised in that** the server (16) has a data logger which can communicate with the metering device software.

9. A metering system according to one of claims 4 to 8 **characterised in that** the server (16) has a maintenance interface by way of which it is possible to access the server (16) from a maintenance server (26).

10. A metering installation system having a multiplicity of metering systems according to one of claims 4 to 9 and a maintenance server (26), by way of which the metering device software can be replaced and the content of the data logger can be read out.

## Revendications

1. Appareil de dosage (1, 12) pourvu d'une chambre de dosage, dans laquelle un élément de déplacement est monté mobile de façon à pouvoir être déplacé en va-et-vient entre deux positions, le volume de la chambre de dosage étant plus grand dans une position que dans l'autre, l'appareil de dosage (1, 12) comprenant en outre :
- un actionneur (2, 14) destiné à entraîner l'élément de déplacement, qui comporte une entrée d'actionneur pour un signal électrique de commande et est conçu de telle sorte qu'un signal électrique de commande appliqué à l'entrée d'actionneur soit converti en un mouvement mécanique,
- un capteur (3, 13) destiné à détecter une grandeur de mesure physique ou chimique, qui comporte une sortie de capteur pour un signal électrique de mesure et est conçu de façon à détecter la grandeur de mesure physique ou chimique, à la convertir en un signal électrique de mesure et à mettre celui-ci à disposition à la sortie de capteur,
- une interface de communication via laquelle l'appareil de dosage (1, 12) peut communiquer avec un serveur (16) placé à distance,
**caractérisé en ce que**
l'actionneur (2, 14), le capteur (3, 13) et l'interface de communication sont conçus de telle sorte qu'un signal électrique de mesure disponible à la sortie de capteur lors du fonctionnement de l'appareil de dosage (1, 12) puisse être transmis au serveur distant (16) via l'interface de communication, et un signal électrique de commande puisse être reçu via l'interface de communication et transmis à l'entrée d'actionneur, un dispositif d'urgence étant prévu qui détecte si l'appareil de dosage (1, 12) communique avec un serveur distant (16) via l'interface de communication, et, si aucune communication n'est détectée ou si aucune communication n'est détectée au-delà d'un intervalle de temps prédéterminé, déclenche un arrêt d'urgence ou une régulation en fonctionnement de secours.

2. Appareil de dosage (1, 12) selon la revendication 1, **caractérisé en ce que** le capteur (3, 13) comporte une entrée de fonctionnement de capteur pour un signal électrique de fonctionnement, un dispositif de génération de signal de fonctionnement étant prévu, lequel peut générer un signal électrique de fonctionnement et est relié à l'entrée de fonctionnement de capteur, le dispositif de génération de signal de fonctionnement étant conçu de façon à pouvoir communiquer, via l'interface de communication, avec un serveur (16) placé à distance.

3. Appareil de dosage (1, 12) selon l'une des revendications 1 à 2, **caractérisé en ce qu'**est prévu un autre capteur (3, 13) destiné à détecter une autre grandeur de mesure physique ou chimique, qui comporte une sortie de capteur pour un signal électrique de mesure et est conçu pour détecter l'autre grandeur de mesure physique ou chimique, la convertir en un signal électrique de mesure et mettre celui-ci à disposition à la sortie de capteur, l'autre capteur (3, 13) et l'interface de communication étant conçus de telle sorte qu'un signal électrique de mesure disponible à la sortie de capteur de l'autre capteur (3, 13) puisse être transmis, via l'interface de communication, au serveur (16) placé à distance.

4. Système de dosage comprenant au moins un appareil de dosage (1, 12) avec une chambre de dosage, dans laquelle un élément de déplacement est monté mobile de façon à pouvoir être déplacé en va-et-vient entre deux positions, le volume de la chambre de dosage étant plus grand dans une position que dans l'autre, l'appareil de dosage (1, 12) comprenant en outre :
- un actionneur (2, 14) destiné à entraîner l'élément de déplacement, qui comporte une entrée d'actionneur pour un signal électrique de commande et est conçu de telle sorte qu'un signal électrique de commande appliqué à l'entrée d'actionneur soit converti en un mouvement mécanique,
- un capteur (3, 13) destiné à détecter une grandeur de mesure physique ou chimique, qui comporte une sortie de capteur pour un signal électrique de mesure et est conçu de façon à détecter la grandeur de mesure physique ou chimique, à la convertir en un signal électrique de mesure et à mettre celui-ci à disposition à la sortie de capteur,
- une interface de communication via laquelle l'appareil de dosage (1, 12) peut communiquer avec un serveur (16) placé à distance,
**caractérisé en ce que**
l'actionneur (2, 14), le capteur (3, 13) et l'interface de communication sont conçus de telle sorte qu'un signal électrique de mesure disponible à la sortie de capteur lors du fonctionnement de l'appareil de dosage (1, 12) puisse être transmis au serveur distant (16) via l'interface de communication, et un signal électrique de commande puisse être reçu via l'interface de communication et transmis à l'entrée d'actionneur, le système de dosage comprenant un serveur (16) placé à distance, doté d'un logiciel d'appareil de dosage qui réalise un moyen de régulation dans lequel le signal électrique de mesure transmis via l'interface de communication est comparé à une courbe de valeurs de consigne, à partir de laquelle est calculée une grandeur de réglage, et la grandeur de réglage est transmise sous forme de signal électrique de commande à l'entrée d'actionneur via l'interface de communication.

5. Système de dosage selon la revendication 4, **caractérisé en ce que** le serveur (16) comprend une interface d'accès à distance, permettant la communication avec le logiciel d'appareil de dosage depuis un appareil externe, l'interface d'accès à distance étant de préférence une interface web.

6. Système de dosage selon l'une des revendications 4 à 5, **caractérisé en ce que** le logiciel d'appareil de dosage est pourvu d'un dispositif d'alarme qui est en mesure d'envoyer un message d'alarme à un appareil externe.

7. Système de dosage selon l'une des revendications 4 à 6, **caractérisé en ce qu'**est prévue une pluralité d'appareils de dosage (1, 12) selon l'une des revendications 1 à 3.

8. Système de dosage selon l'une des revendications 4 à 7, **caractérisé en ce que** le serveur (16) comporte un enregistreur de données pouvant communiquer avec le logiciel d'appareil de dosage.

9. Système de dosage selon l'une des revendications 4 à 8, **caractérisé en ce que** le serveur (16) comporte une interface de maintenance permettant d'accéder au serveur (16) depuis un serveur de maintenance (26).

10. Système d'installation de dosage pourvue d'une pluralité de systèmes de dosage selon l'une des revendications 4 à 9 et d'un serveur de maintenance (26) par l'intermédiaire duquel le logiciel d'appareil de dosage peut être remplacé et le contenu de l'enregistreur de données peut être lu.
